# EUROPEAN PATENT APPLICATION

(11) **EP 3 540 916 A1**
(43) Date of publication of application: **18.09.2019**
(21) Application number: 17869867.6
(22) Date of filing: 31.08.2017
(51) Int. Cl.: H02K 1/28, H02K 7/14, H02K 15/14, H02K 15/16, H02K 23/00

(54) **ROTATING BODY, ELECTRIC BLOWER, AND METHOD FOR MANUFACTURING ROTATING BODY**

(30) Priority: 11.11.2016 JP 2016220907
(71) Applicant: Panasonic Intellectual Property Management Co., Ltd., Osaka-shi, Osaka 540-6207 (JP)
(72) Inventor: YAMAGUCHI, Akira, Osaka-shi Osaka 540-6207 (JP); FUJITA, Katsutoshi, Osaka-shi Osaka 540-6207 (JP); SHIMASAKI, Tetsuo, Osaka-shi Osaka 540-6207 (JP); TAKEDA, Kazuto, Osaka-shi Osaka 540-6207 (JP)
(74) Representative: SSM Sandmair
(86) International application number: PCT/JP2017/031296
(87) International publication number: WO 2018/087998

(57) **Abstract**

A rotating body includes: a rotary shaft; a rotor that is attached to the rotary shaft; a fan that is attached to the rotary shaft, the fan rotating according to rotation of the rotary shaft; and a balance weight that includes a balance adjuster that adjusts a weight balance of the rotating body, the balance weight being attached to the rotary shaft. The fan and the balance weight are disposed to sandwich the rotor.

## Description

### TECHNICAL FIELD

The present disclosure relates to a rotating body, an electric blower, and a method for manufacturing the rotating body. The present disclosure particularly relates to a rotating body including an electric motor and a fan, an electric blower, and a method for manufacturing the rotating body.

### BACKGROUND ART

An electric motor is used, for example, in an electric blower mounted on a vacuum cleaner. The electric blower includes an electric motor and a fan. The electric motor includes a rotor and a stator. The fan is attached to a rotary shaft of the electric motor. As the electric motor, a rectifier electric motor is used, for example.

The vacuum cleaner is desired to be low in noise. Therefore, in the electric blower, it is important to reduce vibration during operation that causes noise.

The vibration of the electric blower is generated due to a weight imbalance in a rotation direction of the rotor of the electric motor. Stated another way, when a center of gravity of the rotor is eccentric with respect to the rotary shaft, centrifugal force that is proportional to a distance between the center of gravity and the rotary shaft is generated due to the rotation of the rotor. As a result, a rotation balance is lost, and vibration is generated in the electric blower. The centrifugal force is proportional to a square of a rotation speed. Therefore, in particular, when the rotor rotates at high speed, the centrifugal force also increases, and the vibration increases. Stated another way, noise generated from the electric blower also increases.

Conventionally, a technology has been proposed for reducing the weight imbalance of the rotor of the electric motor (see PTL 1). PTL 1 discloses a rotor in which an iron core (a core) obtained by stacking a plurality of electromagnetic steel sheets (core plates) is divided into a plurality of pieces in a shaft direction and an end plate is inserted into both ends of the shaft direction so as to be fit into a shape of each shaft.

As another technology for reducing the weight imbalance of the rotor of the electric motor, a method is also known for correcting a balance of a center of gravity by cutting an outer periphery of an iron core of the rotor.

As described above, in the electric blower, the fan serving as an object to be rotated is attached to the rotary shaft of the electric motor. Therefore, there is a problem in which, even if a rotation imbalance of the rotor of the electric motor is reduced by reducing the weight imbalance (shaft deviation) of the rotor, the rotation balance of the electric blower is lost after the fan is fastened to the rotary shaft of the rotor.

In addition, the conventional method for cutting the outer periphery of the iron core of the rotor also has a problem in which a magnetoresistance of the iron core in a cut portion increases and motor characteristics change.

### Citation List

### Patent Literature

PTL 1: Unexamined Japanese Patent Publication No. 2011-24319

### SUMMARY OF THE INVENTION

The present disclosure has been made in order to solve the problems described above. It is an object of the present disclosure to provide a rotating body, an electric blower, and a method for manufacturing the rotating body that are capable of easily reducing a weight imbalance without cutting an iron core of a rotor of an electric motor even in a case of a structure in which an object to be rotated is attached to a rotary shaft of the rotor.

In order to attain the object described above, one aspect of a rotating body according to the present disclosure includes: a rotary shaft; a rotor that is attached to the rotary shaft; an object to be rotated that is attached to the rotary shaft, the object to be rotated rotating according to rotation of the rotary shaft; and a balance weight that includes a first balance adjuster that adjusts a weight balance of the rotating body, the balance weight being attached to the rotary shaft. The object to be rotated and the balance weight are disposed to sandwich the rotor.

In addition, one aspect of an electric blower according to the present disclosure is an electric blower including the rotating body described above. The one aspect of the electric blower according to the present disclosure includes: a rectifier that is disposed between the object to be rotated and the balance weight, the rectifier being attached to the rotary shaft; and a brush that supplies power to the rotor by coming into contact with the rectifier.

Further, one aspect of a method for manufacturing a rotating body according to the present disclosure includes: attaching a rotor to a rotary shaft; attaching an object to be rotated to a side of one end of the rotor in the rotary shaft; attaching a balance weight to a side of another end of the rotor in the rotary shaft; and adjusting a weight balance of the rotating body by forming a cutout in a portion of the balance weight.

Furthermore, another aspect of the method for manufacturing the rotating body according to the present disclosure includes adjusting a weight balance of the rotating body by forming a cutout in a portion of a balance weight after a process including: attaching a rotor to a rotary shaft; attaching an object to be rotated to a side of one end of the rotor in the rotary shaft; and attaching the balance weight to a side of another end of the rotor in the rotary shaft.

According to the present disclosure, in a rotating body that includes a rotor and an object to be rotated that is attached to a rotary shaft of the rotor, a weight imbalance can be easily reduced without cutting an iron core of the rotor.

### BRIEF DESCRIPTION OF DRAWINGS

FIG. 1 is a perspective view of an appearance of an electric blower according to an exemplary embodiment.
FIG. 2 is an exploded perspective view of the electric blower according to the exemplary embodiment.
FIG. 3 is a sectional view of the electric blower according to the exemplary embodiment.
FIG. 4 is a side view of a rotating body according to the exemplary embodiment.
FIG. 5 is a sectional view of the rotating body according to the exemplary embodiment.
FIG. 6 is a flowchart for describing a method for manufacturing the electric blower according to the exemplary embodiment.
FIG. 7 is a sectional view of a rotating body according to another exemplary embodiment.
FIG. 8 is a sectional view of a rotating body according to yet another exemplary embodiment.
FIG. 9 is a flowchart for describing a method for manufacturing a conventional electric blower.

### DESCRIPTION OF EMBODIMENTS

Exemplary embodiments of the present disclosure are described below with reference to the drawings. Note that each of the exemplary embodiments described below provides a preferred specific example of the present disclosure. Accordingly, numerical values, shapes, materials, components, disposition positions and connection forms of the components, steps (processes) and an order of the steps, and the like that are described in the exemplary embodiments below are exemplary, and are not intended to be restrictive of the present disclosure. Thus, from among the components in the exemplary embodiments below, components that are not recited in an independent claim indicating a broadest concept of the present disclosure are described as optional components.

Note that each of the drawings is a schematic drawing, and does not necessarily provide an exact illustration. In addition, in each of the drawings, substantially identical configurations are given identical reference marks, and a duplicate description is omitted or simplified.

### (Exemplary embodiment)

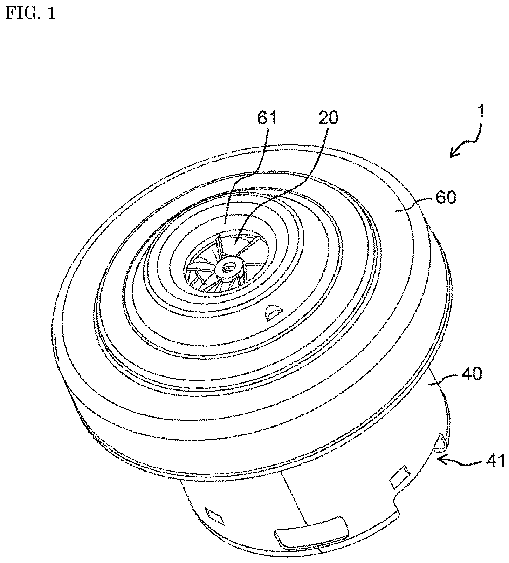

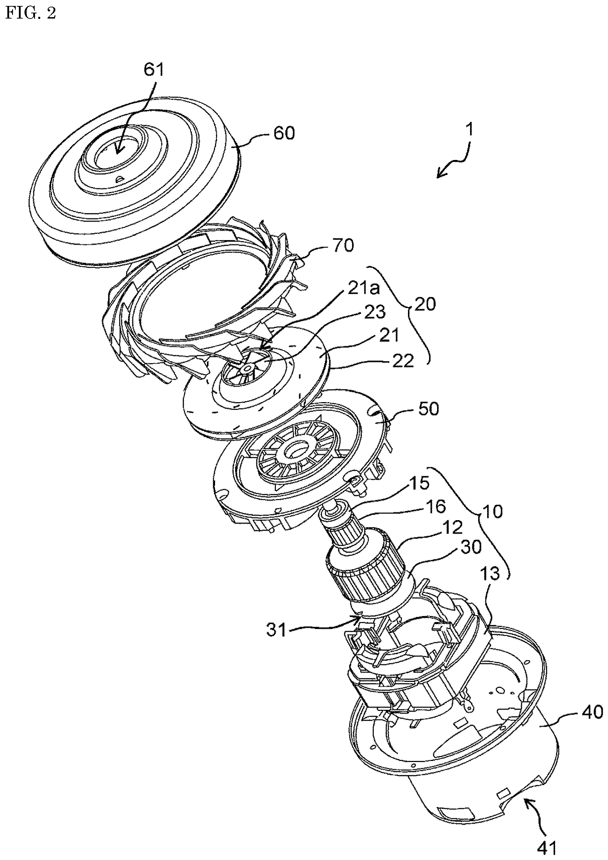

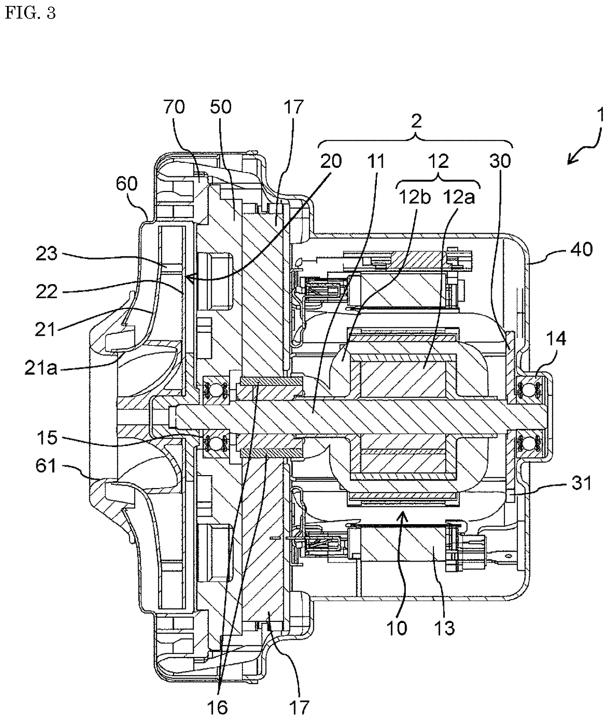

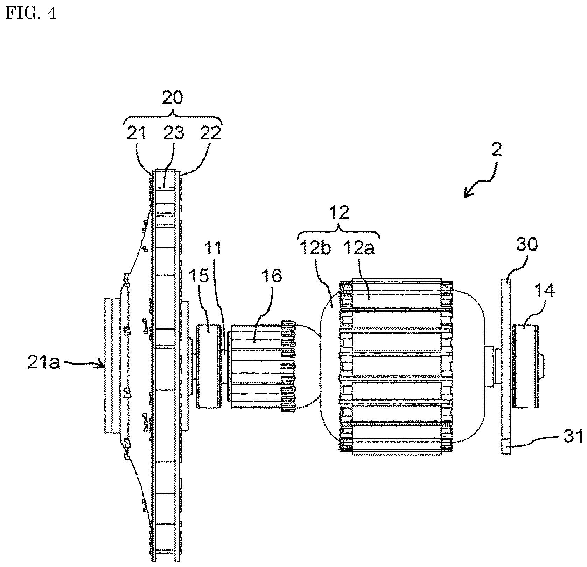

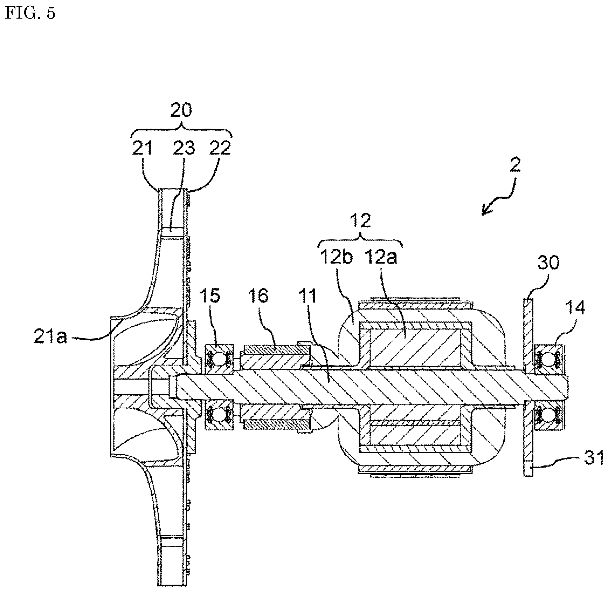

Electric blower 1 and rotating body 2 incorporated into electric blower 1 according to an exemplary embodiment are described with reference to FIGS. 1 to 5. FIG. 1 is a perspective view of an appearance of electric blower 1 according to the exemplary embodiment. FIG. 2 is an exploded perspective view of electric blower 1. FIG. 3 is a sectional view of electric blower 1. FIG. 4 is a side view of rotating body 2 according to the exemplary embodiment. FIG. 5 is a sectional view of rotating body 2.

Electric blower 1 according to the present exemplary embodiment is used, for example, in household vacuum cleaners. Electric blower 1 includes electric motor 10 (a motor), fan 20 that is rotated by electric motor 10, and balance weight 30, as illustrated in FIGS. 1 to 3. Electric blower 1 further includes housing 40, bracket 50, fan case 60, and air guide 70. Fan 20, fan case 60, and air guide 70 configure a blower of electric blower 1.

As illustrated in FIGS. 2 and 3, electric motor 10 includes rotary shaft 11, rotor 12, stator 13, first bearing 14, and second bearing 15. In the present exemplary embodiment, electric motor 10 is a rectifier electric motor (a motor with a brush), and further includes rectifier 16 and brush 17.

Rotating body 2 incorporated into electric blower 1 is configured by rotating parts in electric blower 1. Specifically, as illustrated in FIGS. 4 and 5, rotating body 2 is a rotating device that is configured by rotary shaft 11 and parts that are rotated by rotary shaft 11. In the present exemplary embodiment, rotating body 2 includes rotary shaft 11, rotor 12, fan 20, and balance weight 30.

Rotary shaft 11 is a shaft made of metal. As illustrated in FIGS. 3 and 5, rotary shaft 11 is fixed to iron core 12a of rotor 12, for example, so as to penetrate a center of iron core 12a. Rotary shaft 11 is inserted into iron core 12a, for example, by press-fitting, and is secured to iron core 12a. Rotary shaft 11 penetrates rotor 12 (iron core 12a), and is disposed so as to extend to both sides of rotor 12.

One end of rotary shaft 11 serving as an end on a side of balance weight 30 is supported by first bearing 14. On the other hand, another end of rotary shaft 11 serving as an end on a side of fan 20 is supported by second bearing 15. As described above, both ends of rotary shaft 11 are rotatably held by first bearing 14 and second bearing 15. The end on the side of fan 20 of rotary shaft 11 protrudes from second bearing 15, and penetrates bracket 50.

As illustrated in FIGS. 3 to 5, rotor 12 (a rotor) is attached to rotary shaft 11. Rotor 12 is disposed in a position sandwiched between fan 20 and balance weight 30.

Rotor 12 includes iron core (rotor core) 12a and winding coil 12b (a rotor coil). In iron core (rotor core) 12a, electromagnetic steel sheets are stacked. Winding coil 12b (the rotor coil) is wound around each of a plurality of teeth of iron core 12a. Rotor 12 rotates at high speed, as an example, at 40,000 revolutions per minute (rpm) to 50,000 rpm. Rotor 12 is an inner rotor, and is disposed inside stator 13.

Stator 13 (a stator) illustrated in FIGS. 2 and 3 generates magnetic force that acts on rotor 12. Stator 13 includes, for example, an iron core (a stator core) and a winding coil (a stator coil). Stator 13 is attached to housing 40.

First bearing 14 is a bearing that supports the end on the side of balance weight 30 of rotary shaft 11. First bearing 14 rotatably holds rotary shaft 11. First bearing 14 is fixed to a bottom of housing 40.

Second bearing 15 is a bearing that supports the end on the side of fan 20 of rotary shaft 11. Second bearing 15 rotatably holds rotary shaft 11. Second bearing 15 is fixed to bracket 50.

As illustrated in FIGS. 3 to 5, rectifier 16 is disposed between fan 20 and balance weight 30, and is attached to rotary shaft 11. In particular, in the present exemplary embodiment, rectifier 16 is disposed between fan 20 and rotor 12, and is attached to rotary shaft 11. Rectifier 16 is fixed to a portion between rotor 12 and second bearing 15 in rotary shaft 11. Rectifier 16 is electrically connected to winding coil 12b of rotor 12, and is in sliding contact with brush 17.

As illustrated in FIG. 3, brush 17 is a feeding brush that supplies power to rotor 12 by coming into contact with rectifier 16. As an example, brush 17 is a carbon brush. Brush 17 supplies an armature current to rectifier 16 by coming into contact with rectifier 16. A pair of brushes 17 are provided. The pair of brushes 17 are disposed so as to clamp rectifier 16. The pair of brushes 17 are attached to bracket 50 in a state of being biased toward rectifier 16 by using a spring or the like. Stated another way, internal ends of the pair of brushes 17 abut onto rectifier 16.

As illustrated in FIGS. 3 to 5, fan 20 is attached to rotary shaft 11. Fan 20 rotates according to rotation of rotary shaft 11. Stated another way, fan 20 is attached to rotary shaft 11 as an object to be rotated by electric motor 10. Rotation of rotor 12 causes rotary shaft 11 to rotate. By doing this, fan 20 also rotates. Fan 20 is attached to an end of rotary shaft 11 that protrudes from bracket 50. Fan 20 is a centrifugal fan, and sucks air from inlet port 61 of fan case 60.

As illustrated in FIGS. 2 to 5, fan 20 includes upper plate 21, lower plate 22, and a plurality of fan blades 23. Upper plate 21 includes suction port 21a that is open so as to face inlet port 61 of fan case 60. Lower plate 22 is spaced apart from upper plate 21 by a prescribed gap. The plurality of fan blades 23 are clamped by upper plate 21 and lower plate 22. As an example, fan 20 is formed using aluminum alloy. Stated another way, upper plate 21, lower plate 22, and fan blades 23 are configured by aluminum alloy. Note that upper plate 21 is different in thickness from lower plate 22. As an example, a thickness of upper plate 21 is 0.8 mm, and a thickness of lower plate 22 is 1.0 mm.

Balance weight 30 is a weight adjusting member that adjusts a weight balance of rotating body 2. Balance weight 30 is attached to rotary shaft 11, and rotates according to rotation of rotary shaft 11. Balance weight 30 is fixed to rotary shaft 11 by press-fitting, but the present disclosure is not limited to this.

Balance weight 30 includes balance adjuster 31 that adjusts the weight balance of rotating body 2. Balance adjuster 31 is a cutout obtained by cutting out a portion of balance weight 30. Stated another way, by cutting out a portion of balance weight 30, the weight balance of rotating body 2 is adjusted. Balance weight 30 is, for example, a substantially circular metallic plate. Accordingly, for example, by performing cutting to cut out a portion of an outer peripheral edge of the substantially circular metallic plate, the weight balance of rotating body 2 can be adjusted. Note that a cut-out shape of balance adjuster 31 (the cutout) formed by performing cutting-out on balance weight 30 is, for example, a substantially triangular shape in a plan view, as illustrated in FIG. 2. However, the present disclosure is not limited to this, and the cut-out shape may be a rectangular shape or the like, and an arbitrary shape can be employed.

As an example, balance weight 30 is an iron plate having a thickness of 2 mm. However, a principal component material of balance weight 30 is not limited to iron, and a metallic material other than iron, such as aluminum or aluminum alloy, may be used. From a viewpoint of adjusting the weight balance of rotating body 2, it is desirable that a material having a large specific gravity be used as a metallic material that configures balance weight 30. In this case, as the metallic material of balance weight 30, brass, copper, or the like can be used. In addition, a thickness of balance weight 30 is not limited to 2 mm.

As illustrated in FIGS. 3 to 5, balance weight 30 is disposed between rotor 12 and first bearing 14. Specifically, balance weight 30 is disposed in close proximity of first bearing 14 on a side of rotor 12 of first bearing 14.

Balance weight 30 is disposed in a position closer to a center of gravity of rotor 12 than fan 20. Specifically, a space between balance weight 30 and rotor 12 is smaller than a space between balance weight 30 and fan 20.

It is desirable that an outer diameter of balance weight 30 be larger than an outer diameter of first bearing 14. The outer diameter of balance weight 30 is almost equal to an outer diameter of rotor 12. However, it is desirable that the outer diameter of balance weight 30 be smaller than the outer diameter of rotor 12.

As illustrated in FIGS. 2 and 3, housing 40 (a frame) is a housing made of metal that houses electric motor 10. Housing 40 has a substantial cup shape having one opened surface. Exhaust port 41 that exhausts inside air is formed at a bottom of housing 40.

Bracket 50 is a lid made of synthetic resin, and is disposed to cover an opening of housing 40. An opening (a gap) is formed between bracket 50 and an inner surface of housing 40. The opening (the gap) introduces cooling air that has been rectified by air guide 70 to an inside of housing 40.

Fan case 60 is fixed to housing 40 so as to cover fan 20, bracket 50, and air guide 70. Fan case 60 includes inlet port 61 that sucks outside air. A center of inlet port 61 matches a rotation center of fan 20.

Air guide 70 rectifies a flow of gas sucked from inlet port 61 of fan case 60. Air guide 70 is formed in a ring shape, and includes a plurality of guide plates that rectify the flow of gas.

Next, an operation of electric blower 1 configured as described above is described with reference to FIGS. 2 and 3.

When power is supplied to electric motor 10, a field current flows to stator 13 (the winding coil), and an armature current flows to rotor 12 (winding coil 12b) via brushes 17. Torque is generated between a magnetic flux generated in stator 13 due to the field current and the armature current that flows in rotor 12, and rotor 12 rotates.

When rotor 12 rotates, fan 20 rotates according to the rotation. The rotation of fan 20 causes air to be sucked from inlet port 61 to an inside of fan case 60. The air sucked to the inside of fan case 60 is guided to an outer periphery of fan case 60, and is formed into a swirling flow in a void between air guide 70 and fan case 60. The air formed into the swirling flow in the void is exhausted from exhaust port 41 of housing 40 to an outside of electric blower 1 while cooling down rotor 12 and stator 13 of electric motor 10.

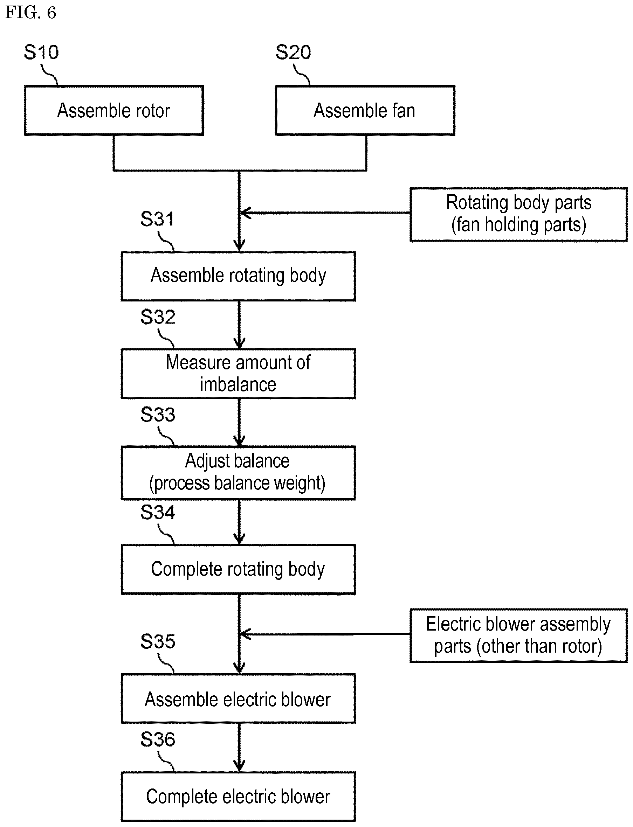

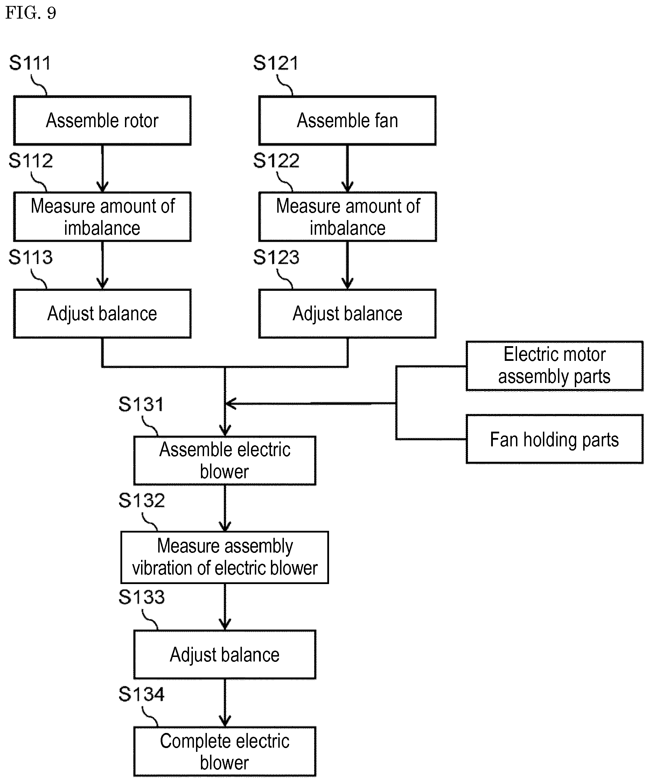

Next, a method for manufacturing electric blower 1 according to the present exemplary embodiment is described in comparison with a method for manufacturing a conventional electric blower with reference to FIGS. 6 and 9. FIG. 6 is a flowchart for describing the method for manufacturing electric blower 1 according to the exemplary embodiment. FIG. 9 is a flowchart for describing the method for manufacturing the conventional electric blower.

As illustrated in FIG. 9, the conventional electric blower is manufactured by combining a rotor and a fan after separately manufacturing the rotor and the fan.

Specifically, in a process of manufacturing the rotor, first, the rotor is assembled by inserting a rotary shaft into an iron core (step S111). In order to determine a degree of a weight imbalance of the rotor, an amount of a rotation imbalance of the rotor is measured (step S112). A rotation balance of the rotor is adjusted in such a way that an amount of imbalance of the rotor is reduced (step S113). By doing this, the weight imbalance of the rotor can be reduced. The rotation balance of the rotor can be adjusted, for example, by cutting an outer periphery of the iron core of the rotor.

On the other hand, in a process of manufacturing the fan, the fan is first assembled (step S121). An amount of a rotation imbalance of the fan is measured (step S122). A rotation balance of the fan is adjusted in such a way that an amount of imbalance of the fan is reduced (step S123). By doing this, a weight imbalance of the fan can be reduced.

Next, an electric blower is assembled by combining the rotor and the fan that have been manufactured as described above by using various parts of electric motor assembly parts and fan holding parts (step S131). After the electric blower has been assembled, an amount of imbalance of the electric blower is measured by measuring vibration (assembly vibration) of the electric blower (step S132). A rotation balance is readjusted in such a way that the amount of imbalance of the electric blower is reduced (step S133). By doing this, the electric blower is completed (step S134).

Meanwhile, in the method illustrated in FIG. 9 for manufacturing the conventional electric blower, even if a rotation imbalance (shaft deviation) of the rotor is reduced and a rotation imbalance (shaft deviation) of the fan is also reduced, a rotation balance is lost again after the rotor and the fan are fastened in some cases. Therefore, even if the rotation balance of the rotor is adjusted so that the amount of imbalance of the rotor becomes zero and the rotation balance of the fan is also adjusted so that the amount of imbalance of the fan becomes zero, a rotation imbalance is generated again after the rotor and the fan are fastened in some cases. Accordingly, in consideration in terms of the electric blower, the rotation balance individually needs to be adjusted in each of assembly of the rotor, assembly of the fan, and assembly of the electric blower. Accordingly, a balance needs to be adjusted three times in total.

In contrast, in the method for manufacturing electric blower 1 according to the present exemplary embodiment, a rotation balance is not independently adjusted in rotor 12 or in fan 20. After rotating body 2 is assembled by combining rotor 12 and fan 20, the rotation balance is adjusted in such a way that a weight imbalance of rotating body 2 is reduced. Stated another way, the rotation balance is adjusted only once.

A specific method for manufacturing electric blower 1 according to the present exemplary embodiment is described.

As illustrated in FIG. 6, rotor 12 is first assembled (step S10). Specifically, iron core 12a is attached to rotary shaft 11, and winding coil 12b is wound around iron core 12a.

Fan 20 is separately assembled (step S20). Specifically, upper plate 21, lower plate 22, and fan blades 23 are jointed.

Next, rotor 12 and fan 20 that have been assembled are combined using rotating body parts such as fan holding parts, and balance weight 30 is attached to rotary shaft 11, so that rotating body 2 is assembled (step S31). Specifically, fan 20 is attached to one side of rotor 12 in rotary shaft 11. Balance weight 30 is attached to another side of rotor 12 in rotary shaft 11.

An amount of a rotation imbalance of rotating body 2 is measured (step S32). A rotation balance of rotating body 2 is adjusted in such a way that an amount of imbalance of rotating body 2 is reduced (step S33). The rotation balance of rotating body 2 is adjusted, for example, by forming a cutout (balance adjuster 31) in a portion of balance weight 30. Stated another way, by forming the cutout in a portion of balance weight 30, a weight balance of rotating body 2 is adjusted, and a rotation imbalance (shaft deviation) is reduced. By doing this, rotating body 2 is completed (step S34).

Next, assembly parts of electric blower 1 are combined with rotating body 2 (step S35). By doing this, electric blower 1 is completed (step S36).

As described above, rotating body 2 according to the present exemplary embodiment is incorporated into electric blower 1. Rotating body 2 includes rotary shaft 11, rotor 12, fan 20, and balance weight 30. Rotor 12 is attached to rotary shaft 11. Fan 20 is attached to rotary shaft 11 and rotates according to rotation of rotary shaft 11. Balance weight 30 includes balance adjuster 31 that adjusts the weight balance of rotating body 2. Balance weight 30 is attached to rotary shaft 11. Fan 20 and balance weight 30 are disposed so as to sandwich rotor 12.

As described above, with respect to rotating body 2 having a structure in which fan 20 is attached to rotary shaft 11 of rotor 12, rotor 12 is disposed so as to be sandwiched by fan 20 and balance weight 30. By doing this, a weight balance of an entirety of rotating body 2 can be adjusted by balance adjuster 31 of balance weight 30. Thus, a rotation imbalance in rotating body 2 can be easily reduced. Accordingly, vibration generated due to a weight imbalance with rotary shaft 11 as a center can be suppressed.

In addition, the weight imbalance is adjusted without cutting iron core 12a of rotor 12. Accordingly, there is no change in magnetoresistance generated by cutting iron core 12a. By doing this, a magnetic flux density can be made uniform between rotor 12 and a field system. Accordingly, electric blower 1 having stable motor characteristics can be realized.

As described above, in rotating body 2 that includes rotor 12 and fan 20 attached to rotary shaft 11 of rotor 12, a weight imbalance can be easily reduced without cutting iron core 12a of rotor 12.

In addition, balance weight 30 is disposed in a position closer to a center of gravity of rotor 12 than fan 20.

By doing this, an adjustment width (an adjustment amount) of the weight balance using balance weight 30 can be increased.

In addition, rotating body 2 further includes first bearing 14 that supports the end on the side of balance weight 30 of rotary shaft 11. Balance weight 30 is disposed between rotor 12 and first bearing 14.

By doing this, heat conducted toward first bearing 14 can be radiated by balance weight 30. Thus, first bearing 14 can be effectively suppressed from deteriorating due to heat. This is described below.

Rotor 12 becomes a heat generating body in some cases. Thus, in a case where heat has been generated in rotor 12, the generated heat is conducted through rotary shaft 11, and first bearing 14 and second bearing 15 deteriorate due to this heat. At this time, second bearing 15 is cooled down by fan 20, but first bearing 14 is not likely to be cooled down by fan 20. Therefore, in a case where balance weight 30 is not provided, first bearing 14 is more likely to deteriorate due to heat than second bearing 15.

In contrast, in the present exemplary embodiment, balance weight 30 is provided between rotor 12 and first bearing 14. By doing this, heat to be conducted from rotor 12 via rotary shaft 11 to first bearing 14 can be dissipated using balance weight 30, and can be radiated from balance weight 30 into air. Stated another way, balance weight 30 functions as a heat radiation fin. Accordingly, first bearing 14 can be effectively suppressed from deteriorating due to heat. Thus, rotating body 2 and electric blower 1 that have high reliability can be achieved.

As described above, a heat radiation effect using balance weight 30 suppresses an influence of heat on first bearing 14. By doing this, as grease of first bearing 14, general-purpose inexpensive grease, rather than expensive grease having high heat resistance, can be used. Accordingly, rotating body 2 and electric blower 1 can be manufactured at a low cost.

In addition, balance weight 30 is a substantially circular metallic plate.

As described above, by configuring balance weight 30 using a metallic material having high thermal conduction, the heat radiation effect using balance weight 30 can be improved. By doing this, rotating body 2 and electric blower 1 that have further higher reliability can be achieved.

In addition, balance adjuster 31 is a cutout obtained by cutting out a portion of balance weight 30.

Therefore, a weight of rotating body 2 can be changed by cutting balance weight 30. Accordingly, the weight balance of rotating body 2 can be easily adjusted.

In addition, electric blower 1 according to the present exemplary embodiment includes rotating body 2, and electric blower 1 includes rectifier 16 and brush 17. Rectifier 16 is disposed between fan 20 and rotor 12, and is attached to rotary shaft 11. Brush 17 supplies power to rotor 12 by coming into contact with rectifier 16.

By doing this, when brush 17 comes into sliding contact with rectifier 16, abrasion powder (carbon powder) of brush 17 that is generated due to abrasion of brush 17 and scatters can be blocked by balance weight 30. Accordingly, the abrasion powder of brush 17 can be suppressed from entering first bearing 14. As described above, due to a dustproof effect using balance weight 30, first bearing 14 can be suppressed from deteriorating due to the abrasion powder of brush 17. Accordingly, rotating body 2 and electric blower 1 that have high reliability can be achieved.

In addition, an outer diameter of balance weight 30 is smaller than an outer diameter of rotor 12, and is larger than an outer diameter of first bearing 14.

As described above, by configuring the outer diameter of balance weight 30 to be larger than the outer diameter of first bearing 14, the dustproof effect and the heat radiation effect using balance weight 30 can be improved. Simultaneously, in a case where balance weight 30 is cut and the weight balance of rotating body 2 is adjusted, a cutting stock can be secured. In addition, by configuring the outer diameter of balance weight 30 to be smaller than the outer diameter of rotor 12, electric blower 1 can be manufactured by easily incorporating rotating body 2 with balance weight 30.

Further, a method for manufacturing rotating body 2 according to the present exemplary embodiment includes: attaching rotor 12 to rotary shaft 11; attaching fan 20 to a side of one end of rotor 12 in rotary shaft 11; attaching balance weight 30 to a side of another end of rotor 12 in rotary shaft 11; and adjusting a weight balance of rotating body 2 by forming a cutout in a portion of balance weight 30.

Therefore, by forming a cutout in a portion of balance weight 30, the weight of rotating body 2 can be changed, and the weight balance of the entirety of rotating body 2 can be adjusted. Thus, the weigh imbalance of rotating body 2 can be easily reduced without cutting iron core 12a of rotor 12. Accordingly, rotating body 2 that enables vibration to be suppressed can be manufactured.

The rotating body, the electric blower, and the method for manufacturing the rotating body according to the present disclosure have been described above on the basis of the exemplary embodiment. However, the present disclosure is not limited to the exemplary embodiment described above.

### (Variations)

Variations of the exemplary embodiment of the present disclosure are described below with reference to the drawings. Note that components identical to components described in the exemplary embodiment above are denoted by identical reference marks, and the description above is cited.

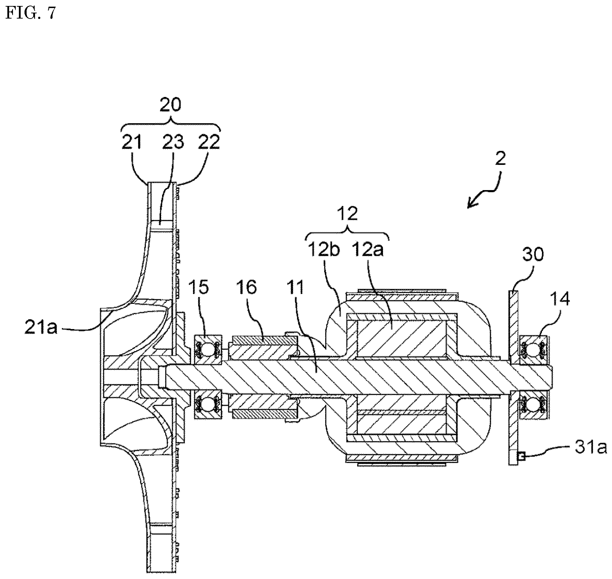

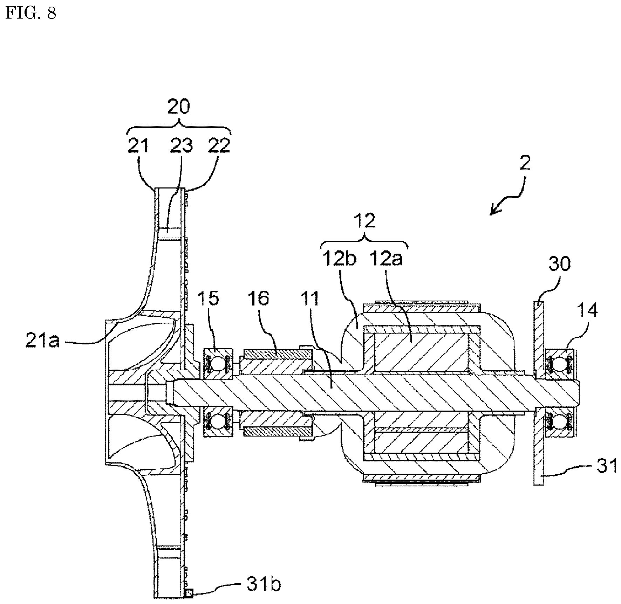

FIGS. 7 and 8 are sectional views of a rotating body according to other exemplary embodiments.

For example, in the exemplary embodiment described above, fan 20 has been illustrated as an object to be rotated that is attached to rotary shaft 11, but the present disclosure is not limited to this. The object to be rotated that is attached to rotary shaft 11 may be a pulley or the like.

In addition, in the exemplary embodiment described above, balance adjuster 31 of balance weight 30 is a cutout obtained by cutting out a portion of balance weight 30, but the present disclosure is not limited to this. For example, as illustrated in FIG. 7, balance adjuster 31 may be configured by balance adjusting body 31a that is added to balance weight 30. As balance adjusting body 31a, a resin piece or a metallic piece can be used. The weight balance of rotating body 2 can be adjusted by jointing one or a plurality of resin pieces or metallic pieces to balance weight 30 serving as a metallic plate. Stated another way, a means for adjusting a weight balance using balance weight 30 may reduce a weight of balance weight 30, or may increase the weight of balance weight 30.

In addition, in the exemplary embodiment described above, the weight balance of rotating body 2 is adjusted by only using balance weight 30, but the present disclosure is not limited to this. For example, in addition to a weight balance using balance weight 30, the weight balance of rotating body 2 may be adjusted by using, for example, fan 20. Stated another way, balance adjuster 31 of balance weight 30 may serve as a first balance adjuster, and fan 20 may include a second balance adjuster. In this case, the second balance adjuster may be a cutout obtained by cutting out a portion of fan 20, or may be balance adjusting body 31b that is added to fan 20, as illustrated in FIG. 8. For example, by cutting out at least a portion of one of upper plate 21 and lower plate 22 in fan 20, the weight balance of rotating body 2 can be adjusted. In this case, by configuring upper plate 21 and lower plate 22 to have thicknesses different from each other, fine adjustment can be easily performed on the weight balance of rotating body 2.

In addition, in the exemplary embodiment described above, electric motor 10 is a rectifier electric motor using brushes 17, but the present disclosure is not limited to this. For example, electric motor 10 may be a brushless motor or the like that does not use brushes 17.

Furthermore, the method for manufacturing rotating body 2 according to the present exemplary embodiment may include adjusting a weight balance of rotating body 2 by forming a cutout in a portion of balance weight 30 after a process including: attaching rotor 12 to rotary shaft 11; attaching fan 20 to a side of one end of rotor 12 in rotary shaft 11; and attaching balance weight 30 to a side of another end of rotor 12 in rotary shaft 11.

### INDUSTRIAL APPLICABILITY

The technology of the present disclosure can be used in a rotating body, an electric blower, and the like. The technology of the present disclosure is particularly useful in a vacuum cleaner that operates at high-speed rotation, an electric blower mounted on equipment for automobiles, or the like.

### REFERENCE MARKS IN THE DRAWINGS

- 1:: electric blower
- 2:: rotating body
- 10:: electric motor
- 11:: rotary shaft
- 12:: rotor
- 12a:: iron core
- 12b:: winding coil
- 13:: stator
- 14:: first bearing
- 15:: second bearing
- 16:: rectifier
- 17:: brush
- 20:: fan
- 21:: upper plate
- 21a:: suction port
- 22:: lower plate
- 23:: fan blade
- 30:: balance weight
- 31:: balance adjuster
- 31a, 31b:: balance adjusting body
- 40:: housing
- 41:: exhaust port
- 50:: bracket
- 60:: fan case
- 61:: inlet port
- 70:: air guide

## Claims

1. A rotating body comprising:
a rotary shaft;
a rotor that is attached to the rotary shaft;
an object to be rotated that is attached to the rotary shaft, the object to be rotated rotating according to rotation of the rotary shaft; and
a balance weight that includes a first balance adjuster that adjusts a weight balance of the rotating body, the balance weight being attached to the rotary shaft,
wherein the object to be rotated and the balance weight are disposed to sandwich the rotor.

2. The rotating body according to claim 1, wherein the balance weight is disposed in a position closer to a center of gravity of the rotor than the object to be rotated.

3. The rotating body according to claim 1 or 2, further comprising a bearing that supports an end on a side of the balance weight of the rotary shaft,
wherein the balance weight is disposed between the rotor and the bearing.

4. The rotating body according to claim 3, wherein an outer diameter of the balance weight is smaller than an outer diameter of the rotor, and is larger than an outer diameter of the bearing.

5. The rotating body according to any one of claims 1 to 4, wherein the balance weight includes a substantially circular metallic plate.

6. The rotating body according to any one of claims 1 to 5, wherein the first balance adjuster includes a cutout obtained by cutting out a portion of the balance weight.

7. The rotating body according to any one of claims 1 to 5, wherein the first balance adjuster is configured by a balance adjusting body that is added to the balance weight.

8. The rotating body according to any one of claims 1 to 7, wherein the object to be rotated includes a second balance adjuster.

9. The rotating body according to claim 8, wherein the second balance adjuster includes a cutout obtained by cutting out a portion of the object to be rotated.

10. The rotating body according to any one of claims 1 to 9, wherein the object to be rotated includes a fan.

11. An electric blower including the rotating body according to any one of claims 1 to 10, the electric blower comprising:
a rectifier that is disposed between the object to be rotated and the balance weight, the rectifier being attached to the rotary shaft; and
a brush that supplies power to the rotor by coming into contact with the rectifier.

12. A method for manufacturing a rotating body, the method comprising:
attaching a rotor to a rotary shaft;
attaching an object to be rotated to a side of one end of the rotor in the rotary shaft;
attaching a balance weight to a side of another end of the rotor in the rotary shaft; and
adjusting a weight balance of the rotating body by forming a cutout in a portion of the balance weight.

13. A method for manufacturing a rotating body, the method comprising adjusting a weight balance of the rotating body by forming a cutout in a portion of a balance weight after a process including:
attaching a rotor to a rotary shaft;
attaching an object to be rotated to a side of one end of the rotor in the rotary shaft; and
attaching the balance weight to a side of another end of the rotor in the rotary shaft.
